# EUROPEAN PATENT SPECIFICATION

(11) **EP 3 949 898 B1**
(45) Date of publication and mention of the grant of the patent: **30.10.2024**
(21) Application number: 20782228.9
(22) Date of filing: 30.03.2020
(51) Int. Cl.: A61C 13/225, A61C 8/00, A61C 13/01

(54) **SET OF DENTAL COPINGS AND FIBER BAR FOR THE MANUFACTURE OF DENTAL PROSTHESIS FRAMEWORKS**
SET AUS STUMPFKAPPEN UND FASERSTAB ZUR HERSTELLUNG EINES ZAHNPROTHESENGERÜSTS
ENSEMBLE DE COIFFES DENTAIRES ET BARRE DE FIBRES POUR LA FABRICATION D'ARMATURES DE PROTHÈSES DENTAIRES

(30) Priority: 05.04.2019 BR 102019007006; 29.11.2019 BR 132019025338
(43) Date of publication of application: 09.02.2022
(73) Proprietor: Dentscare Ltda - Me, 89219-501 Joinville (BR)
(72) Inventor: MITTELSTADT, Friedrich Georg, 89204-700 Joinville (BR); WIGGERS, William De Souza, 89220-320 Joinville (BR); BRUHN, Jean Carlos, 89217-315 Joinville (BR)
(74) Representative: Pereira da Cruz, Joao
(86) International application number: PCT/BR2020/050105
(87) International publication number: WO 2020/198827

(56) References cited:
- EP-A1- 2 976 036
- EP-B1- 2 976 036
- WO-A1-2013/004606
- WO-A1-2014/147205
- CA-A1- 2 810 880
- US-A1- 2002 142 265
- US-A1- 2005 214 717
- US-A1- 2006 208 393
- US-A1- 2018 333 229
- US-B1- 9 452 034
- PHILIPPE TARDIEU: "Implant-Supported, Fiber-Reinforced Bridge: From Guided Surgery to Immediate Loading", JOURNAL OF DENTAL HEALTH, ORAL DISORDERS & THERAPY, vol. 3, no. 2, 1 January 2015 (2015-01-01), pages 279 - 285, XP055747299, DOI: 10.15406/jdhodt.2015.03.00085
- TARDIEU P.: "Implant-Supported, Fiber-Reinforced Bridge: From Guide Surgerry to Imediate Loading", JOURNAL OF DENTAL HEALTH, ORAL DISORDERS & THERAPY, vol. 3, no. 2, 19 November 2015 (2015-11-19), pages 279 - 285, XP055747299

## Description

This patent document refers to configurations applied in copings and fiber bars, for manufacturing fixed dental prosthesis frameworks. Also disclosed but not claimed is a method of obtaining the referred frameworks for fixing dental prostheses, using one of these copings here presented and the fiber bars.

Partial or total dental prostheses represent a significant volume in the dental market and are the most practical solution for returning masticatory and aesthetic functions to toothless people and, in addition, to giving back their self-esteem. The most common types are "mucosal supported dental prostheses" (they are loose and rest on the oral tissue gums and palate), "prostheses attached to implants", with attachment type devices (they are fixed and retained by means of pressure), and "prostheses attached to implants by means of screws" (protocol-type prostheses). In relation to the comfort, fixed prostheses have gained preference, as they represent much more security for the user that they will not move unintentionally.

Modern dentistry has presented several options for obtaining these fixed prostheses, the most common and least expensive is the prosthesis obtained from artificial teeth, made of acrylic resin, cast metallic infrastructure and aesthetic coverage also of acrylic resin. The masticatory force in fixed prostheses on implants is exerted on the entire surface of the prosthesis, but discharged only on the implants, since the spaces between implants (or in addition to these in the distal ones) are not mucosupported spaces. Failures are more frequent due to the presence of discontinuities in the molten metal bar (bubbles, for example), poorly made seams, etc., and failures can also occur due to poor connections between the bar and the coping (element known in the segment), resulting in poor adhesion of these during the fusion process, which ends up generating small thicknesses around the coping and consequently a certain "fragility" and possibility of fracture at this point on the coping, a term known as "cantilever". Another inconvenient point is the fact that the spaces between implants are flexed and therefore can result in failure due to material fatigue.

Currently, different types of obtaining dental prosthesis frameworks are known, among them, can be cited: a) "molten metals" obtained by melting metals developed for this function. They are quite resistant, but they are also quite difficult to obtain, as it requires several steps, such as molding the patient, obtaining the mold for the arch and then subsequently manufacturing the prosthesis; b) the "prefabricated metallic structures" that aim to make the process of obtaining metallic infrastructures more agile, they are metallic components that fit together and allow to form the metallic bridges between support points in the implants, simulating the molten metallic infrastructure; c) those of "intraoral soldering with titanium wires" that use spot welding devices that allow fixing titanium wires to the components that fit over the implants, however this method is not the most effective; d) "infrastructures machined from ceramic materials" which are infrastructures machined from materials and equipment using the CAD/CAM technique; these materials, as a rule, require melting or sintering at high temperatures and are used for techniques that use ceramics to obtain 100% of the prosthesis; however, the manufacturing costs are quite high; and e) "structures machined in fiberglass and resin composites" that use pressed and prepolymerized fiberglass and epoxy resin (or polyester) composites, cut into a horseshoe shape, where they are milled and adapted for the most suitable shape of the prosthesis and then joined by gluing to the fixation tubes on the implants; this has some advantages such as the speed with which it is possible to obtain the infrastructure, it has greater lightness compared to metal and even ceramics; however, as disadvantages we have the need for machining to shape the final prosthesis (tool consumption, generation of fiberglass dust, etc.) and, sometimes, the error of not keeping enough structure for resistance beyond the last implant (term known as "cantilever").

In this technical field, more specifically about the method of obtaining from fiberglass and resin composites (item "e" of the previous paragraph), there are already several procedures and techniques known for this purpose. Among these, the most noteworthy are those that use elements known technically as copings, where basically the bars composed of bundles of fiberglass, impregnated with photopolymerizable resins are positioned by the professional, in these elements (the copings), and then later photopolymerized thus forming the infrastructure; the closest technique publicly known on this occasion, which can be cited is the one known commercially as CST (Cable Stayed Framework), where exactly the described technique is applied: fiber bars with resin, distributed by the support elements (copings) and later photopolymerized.

A first problem associated with this technique is the difficulty in orienting and positioning the fiber bar. Technically, in this type of obtaining the framework, the bar made up of bundles of resinous fiber must pass at a certain height from the alveolar ridge, and to facilitate the folds that will be made in the bundle, as well as positioning them properly at this certain height makes it ideal it is a very complicated task for the professional, as it is very difficult to maintain a reference that guarantees a standardization in the distribution and positioning of the bar during the manufacturing process of the framework. It is a laborious technique and should be done extra-orally.

This first problem also brings with it another problem, which is the difficulty of handling the professional who will manufacture the framework, since such guidance will depend, to a great extent, on his manipulation skills, as he currently does not have a significant standardized reference to assist him. In addition, as the fiber bar is malleable, it becomes more difficult to maintain the arc shape shaped by the professional.

This first problem presented can also results in other problems, such as, for example, a poor mechanical distribution of loads in the masticatory function; because, from the mechanical point of view, if the fiber bar is poorly distributed, there will not be a balance throughout the entire infrastructure.

Another problem that can be raised in this type of technique for obtaining this framework from resin fibers is the fact that the adhesion between the resin fiber and the metallic element (coping) would be more effective if there is a mechanical support as an aid element, as well as the bar itself had a more suitable shape, with its flattening, for example, to facilitate its insertion.

Besides, the flattening of the fiberglass bar, this being done at the time of use, by the professional himself, using a suitable instrument, such as pliers or tweezers, results in an effect with temporary duration, since the bundle of fibers that form the bar tends to return its initial shape, with cylindrical cross section, when the pressure stops. Therefore, the deformation made, by a forced way, by the professional, will represent a very superficial and even temporary beneficial technical effect, besides resulting in losses of time and efforts that could be avoided.

Relevant prior art is exemplified by EP 2 976 036 A1, US 2002/142265 A1 and PHILIPPE TARDIEU: "Implant-Supported, Fiber-Reinforced Bridge: From Guided Surgery to Immediate Loading",JOURNAL OF DENTAL HEALTH, ORAL DISORDERS & THERAPY, vol. 3, no. 2, 1 January 2015 (2015-01-01), pages 279-285, which, however, do not disclose a fiber bar with a longitudinal seam along its central region so that the fiber bar cross section comprises an oblong shape.

The invention is as defined in the independent claim.

The object proposed in this document, is in the technical field of dental frameworks obtained through composite material (fiberglass) and light-cured resin; it presents configurations applied in coping, and in the fiber bar that result in a solution to all the problems previously presented, besides allowing a totally innovative method of obtaining the referred prosthesis frameworks.

In relation to coping, the applied configurations is more specifically to provide at least a "hook" element incorporated to said coping, which solves the problem in a unique way, of the difficulty of orientation and positioning of the bar composed by the bundle of resin fibers; this configuration applied to coping, (we will call it a coping with hook or hooks) facilitates its manipulation by the professional when building the framework, standardizing the positioning of the fiber bundle, helping to improve the mechanical distribution and helping with better adhesion (retention ) from the resinous fiber to the metallic element, guaranteeing the maintenance of the shape given to the resin before light curing, among many other advantages associated with this improvement.

Regarding the fiber bar, the applied configurations are due to the fact that it is obtained from a bundle of parallel fibers, not fragmented and aligned longitudinally and that it is covered by a braided layer of glass fibers; and said fiberglass bar is deformed, so that its cross section has an oblong or flat shape, by a longitudinal seam or another longitudinal fixation, along the central region of said fiber bar; this longitudinal seam will result in permanent deformation, making the fiber bar with oblong (or flat) cross section in its natural condition. The beam bar with oblong (or flat) cross-section, in addition to eliminating the need to be forced by the professional and all the inconveniences associated with it, as mentioned above, also brings a series of more evident advantages, such as: facilitate the insertion of the bar in the coping hooks, increase the fracture resistance of the framework in the direction of chewing, decrease the volume of the bar in the lateral direction, gaining space for molding / assembling the structures that will represent the gum and teeth of the future prosthesis.

In addition to the proposed solution, to solve these mentioned problems, the method of obtaining fixed dental prosthesis frameworks using one of the copings configurations with the hook incorporated is also disclosed but not claimed; This method allows adjustments directly in the patient's mouth and will be described in detail below.

Coping, as is already known in this technical field, is a cone-shaped, tubular element, based on a shape that fits over the head of the prosthetic component and allows its fixation on it by means of a screw or by pressure; this component, the coping, is already part of the current process of manufacturing protocol prostheses with metallic infrastructure. However, the object of this application is the applied configurations developed to make the proposed method feasible and are characterized by comprising at least one side hook, incorporated to said coping, preferably starting from its base and projecting up to little more than half height of the coping body. The hook incorporated represents innovation in coping, as it allows positioning and organizing the fiber bar in a position close to the coping, and receives the bite pressure transmitted through the polymerized fiber bar and transfers the bite pressure to the prosthetic components/implants.

The object of this document is also the fiberglass bar, which is obtained from a bundle of parallel fibers, not fragmented and aligned longitudinally and this is covered by a braided layer of fiberglass. This arrangement of the bar and the constructive configuration of coping with the hook incorporated, enables the best obtaining of the prosthesis frameworks, also described in this document. Said fiberglass bar can be deformed, so that its cross section has an oblong shape, or flattened; for this, a longitudinal seam, or another longitudinal fixation is necessary, along the central region of the fiber bar.

The referred coping, in its broadest inventive idea, comprises a body in the shape of a cone-shaped trunk, hollow, and comprising at least one hook incorporated to said body. Said hook, it can be built in a single body with the cone trunk, or it can be a secondary, spare, assembled and properly fixed to the coping later. Said coping provides for at least one hook incorporated, however two hooks, or more, can be provided, aligned or misaligned in relation to each other.

There are other formats for fixing the prosthesis, in addition to screwing, which can be used within the context of this framework and coping with hook. Examples are cemented prostheses and prostheses with attachment. Thus, the object of invention "coping with hook" could have other formats to meet the type and fixation desired. In other words, the referred "coping with hook" can be of the screwed, cemented or attachment type. More broadly, the coping configuration, here claimed, comprising at least one hook, can be adjusted, in terms of its design, to suit all different types of implant systems (all different brands and models), without that the essence of the invention is lost.

This hook or hooks, incorporated to the coping, can have a varied constructive format, as long as it is compatible to receive the constituent element of the framework composed of the bundle of resin fibers and the photopolymerizable polymeric material.

It is characteristic of the configuration applied to coping to provide at least one hook to receive fiber bars, as well as to support the efforts of the framework and assist in the adhesion of the fiber bundle to the metallic element (the coping itself), helping still maintaining the molded shape of the beam while not polymerized.

It is characteristic of the configuration applied to the fiberglass bar, to be obtained from a bundle of parallel fibers, not fragmented and longitudinally aligned and this one to be covered by a braided layer of fiberglass. And said fiberglass bar can be deformed, so that its cross section has an oblong shape, or flattened; for which a longitudinal seam or another longitudinal fixation is necessary, along the central region of said fiber bar.

The characteristic of this configurations using these copings and the fiber bar, is the fact to bring significant improvements, in the positioning, orientation, standardization and mechanical distribution of the resin fiber bundle at the moment of the fabrication of the framework, resulting in the improvement of the function masticatory.

It is also characteristic of the invention that the hook incorporated to the coping allows the fiber bar to be juxtaposed to the coping and to remain organized, with all the fibers of the bundle intact and dense in the form of a rigid and resistant column, a necessary condition for the maximum mechanical strength is obtained solves the problem of split structure around the coping (one half of the bar on each side of the coping), which is often the cause of cantilever fracture.

In addition to these advantageous features, we can also mention the improvement in the surface visual aspect of the prothesis framework.

It is characteristic of the method of obtaining the dental prosthesis framework that it is easy and practical to obtain, and allows adjustments directly in the patient's mouth.

It can also be mentioned that the fiberglass infrastructure is stiffened in the mouth by means of photopolymerization, a solution that allows to quickly obtain an infrastructure that captures and remains faithful to the position of the prosthetic components/implants, a fundamental characteristic for the good fitting of the future prosthesis. The polymerization of the fiber bar in the mouth also allows the professional to adjust the position of the bar in the ideal position for the strength of the prosthesis, at the time of polymerization. In this way, it is possible to move the beam position according to the best convenience or need and to polymerize the structure only when the appropriate position has been reached. This is particularly interesting when considering the position of the bar in the posterior region (cantilever), which has the most critical and important role in this prosthesis framework.

The fiber bar, which is part of the infrastructure, is preferably composed of a braided layer of glass fibers, and inside it runs a bundle of parallel fibers, not fragmented and aligned longitudinally. The intact bundle, with parallel and aligned configuration, brings a high flexural strength to the fiber bar to better adapt to the hooks. And the longitudinal seam along the central region of the fiber bar can be made by different means of fixation, such as resistant thread, or metal clamps, or rivets, or other compatible means.

It is also possible to mention some comparisons with the CST technique, mentioned above, the bar composed of fiber bundles proposed here is much more resistant than the bundles of the CST technique, besides being faster and easier to apply. Due to the characteristics of thickness and method of application, the fibers of the CST technique are not an adequate solution to form a cantilever of adequate strength. In addition, the fiber bundle bar proposed here is equipped with a braided cover that allows the organization of the bundle to be maintained and its easy handling while not polymerized. As well as its longitudinal seam guarantees its flattened to natural shape.

It is also characteristic of the method of obtaining the proposed prosthesis framework, the minimization of errors in its manufacture, as well as the optimization of its obtaining speed.

The figures follow presented, by way of example and illustration, will facilitate the understanding of the matter described and claimed in this document. The images presented are representative and serve to illustrate the different possibilities for configuring copings, and the configuration applied to the fiber bar and illustrations that facilitate the understanding of the method of obtaining, in order to allow a person skilled in the art understanding the inventive concept pleaded in this patent document, not excluding other constructive possibilities not illustrated, as well as combinations of these presented.
Figures 01 and 02 shows a first possible constructive form for coping, with an incorporated hook.
Figures 03 and 04 represent a second possible variation of coping, with an incorporated hook.
Figures 05 and 06 represent a third variation of coping, with an incorporated hook.
Figures 07 and 08 represent a fourth variation of coping, with an incorporated hook.
Figures 09 and 10 represent a fifth variation of coping, with two hooks incorporated.
Figures 11A and 11B represent a sixth variation of coping, in which the hook part is spare and mounted to the main body; the illustration shows a coping with a constructive format, but this variation can be an alternative to any of the possible constructions for coping proposed here.
Figure 12 illustrates, in cross-section, the internal region of the coping with the hook incorporated. The illustration shows a coping with a constructive format (conical seat), but this is just an illustration for one of the possible constructive variations of the internal region, as this may have other constructive configurations, such as cylinder seat, seat with fixation system attachment type and also conical seats for cementation on trunnions, among other possible ones.
Figures 13A and 13B show, in a representative way, the fiber bar with round cross section, which is its original shape. Recalling that said fiber bar is comprised of a bundle of parallel fibers, not fragmented and aligned longitudinally and this being covered by a braided layer of glass fibers.
Figures 14A, 14B, 15A and 15B show, in a representative way, the fiber bar, with the same characteristic as the previous one, but with a flattened section, by sewing with thread (figures 14A and 14B) and with fixing clips (figures 15A and 15B).
Figures 16 and 17 show a representative image of the use of a variation of coping with the hook incorporated in a method of manufacturing fixed denture framework.
Figure 18 shows in a representative way an image of the use of a variation of coping with two hooks incorporated in a method of fabrication of fixed dental prosthesis infrastructure.
Figure 19 illustrates in a representative way an image to facilitate the understanding of the procedure for making the fiberglass bars available, to obtain the referred frameworks.
Figure 20 illustrates a representative image of a fixed dental prosthesis framework obtained through the proposed method that uses coping with the hook incorporated.

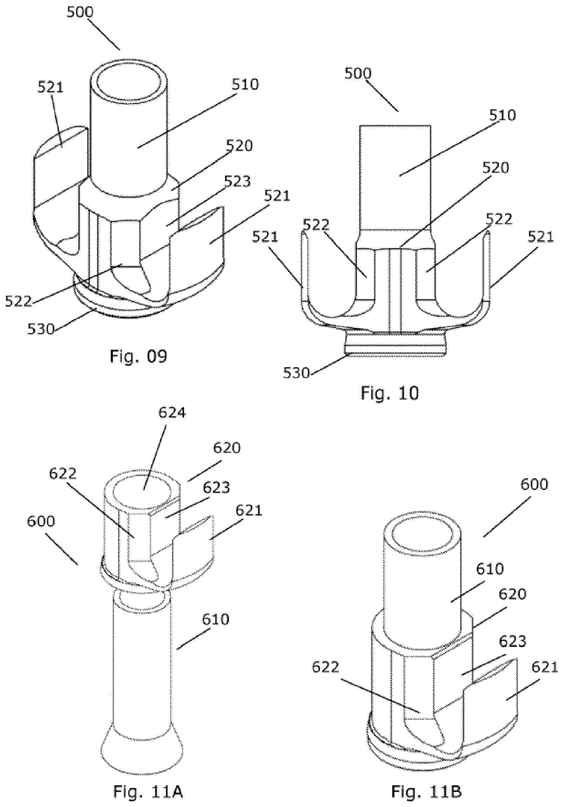

In reference to the figures presented, this patent document referring to the configurations applied in copings and fiber bars for the manufacture of fixed dental prosthesis framework. In relation to coping, in its broader inventive idea it comprises a body in the shape of a cone-shaped trunk, hollow, and comprising at least one hook incorporated to said body. Referred hook, it can be built in a single body with the cone trunk (figures from 01 to 10), or it can be a secondary, spare, assembled and properly fixed to the coping later (figures 11A and 11B).

Said coping provides for at least one hook incorporated, however two or more hooks may be provided, aligned or misaligned in relation to each other. And, in addition to the variation related to the number of hooks and their spare construction, coping with a hook incorporated, the object of this document, can provided for numerous other construction variations, such as recesses, chamfers, among other details. The absence to illustrate all the possible constructive variations does not detract from the inventive step of the matter of this patent document.

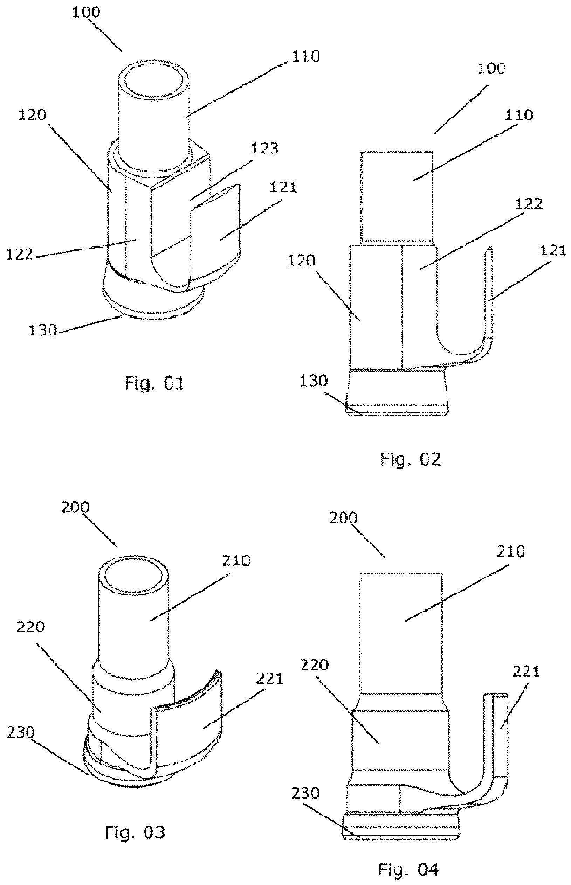

Figures 01 and 02 represent a first constructive variation of the coping (100) with a hook incorporated. In this constructive configuration, referred coping (100) provides an upper portion (110), an intermediate portion (120), and the base (130); and the hook (121) that departs from the base region (130) to preferably the intermediate region (120); and in said intermediate portion (120) a chamfer (122) is provided that has the function of facilitating the direction of the fiber bundle in the circular or arc direction, as required by the shape of the prosthesis. Likewise, other forms of rounding (not shown) can do this function; and the wall (123), front of the hook (121), in this illustration, is flat.

Figures 03 and 04 represent a second constructive variation of the coping (200) with a hook incorporated. In this constructive configuration, said coping (200) provides an upper portion (210), an intermediate portion (220) and the base (230); and the hook (221) that departs from the base region (230) to preferably the intermediate region (220); and said intermediate portion (120) is cylindrical with the region frontal to the hook also with curved surface, being a constructive variant that helps to organize the bundle of fibers in such a way that it is available in the central alignment of the prosthesis axis, which it is interesting to maintain the lower volume of the framework (less interference in the volume of the prosthesis) and positioning for efficient mechanical function.

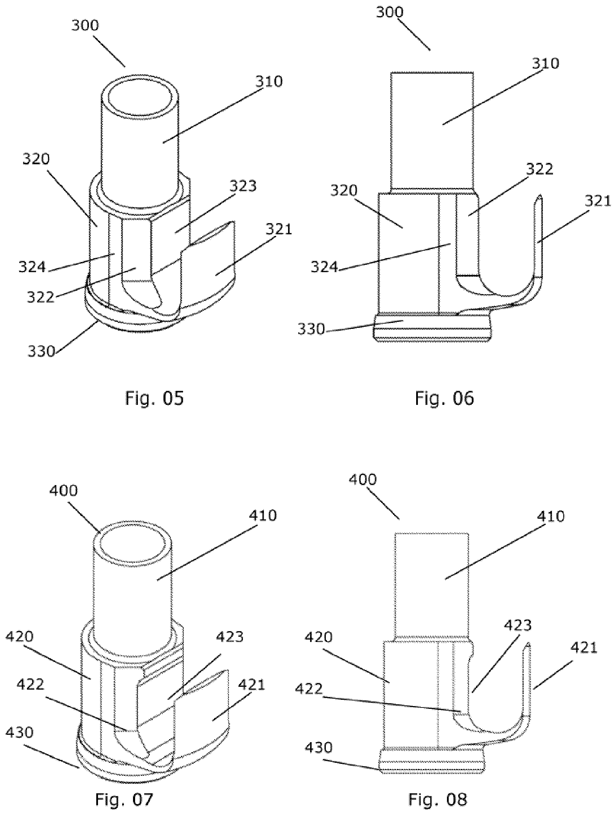

Figures 05 and 06 represent a constructive variation of the coping (300) with the hook incorporated. In this constructive configuration, said coping (300) provides an upper portion (310), an intermediate portion (320) and the base (330); and the hook (321) that departs from the base region (330) to preferably the intermediate region (320); and in said intermediate portion (320) a larger chamfer (322) is provided, which allows the bundle to bend towards the central axis of the prosthesis, ensuring better bundle organization; and the wall (323), front to the hook (321) has a flat surface, and also provides for a smaller chamfer (324) adjacent to the larger chamfer (322).

Figures 07 and 08 represent a constructive variation of the coping (400) with the hook incorporated. In this configuration, said coping (400) provides an upper portion (410), an intermediate portion (420) and the base (430); and the hook (421) that departs from the base region (430) to preferably the intermediate region (420); and in said intermediate portion (420) a larger chamfer (422) is provided, which allows the bundle to bend towards the central axis of the prosthesis, ensuring better bundle organization; and the region (423), front of the hook (421) has a recess shape (groove or depression); a configuration of this region (423) with recess, can be useful in the retention function of the beam bar after polymerization, it represents a mechanical restriction of retention of the bar next to the coping; and it can also provide for a smaller chamfer (424) adjacent to the larger chamfer (422).

Figures 09 and 10 represent a constructive variation of the coping (500) with two hooks incorporated. In this constructive configuration, said coping (500) provides an upper portion (510), an intermediate portion (520) and the base (530); and provides for two hooks (521), preferably aligned with each other; and in said intermediate portion (520), a chamfer (522) is also provided, which allows the bundle to bend towards the central axis of the prosthesis: bundle arrangement; and the wall (523), front to the handles (521), in this illustration, has a flat surface.

As already presented, figures 11A and 11B represent a variation of the coping (600), in which the intermediate portion (620) containing at least one hook (621) is spare, that is, it constitutes a secondary part with a hole (624) through, which is mounted to the main body (610); said hole (624) must have compatible dimensions to be properly fixed to the main body (610). The intermediate portion may also comprise chamfer (622), as shown, as well as other constructive details (not shown) if necessary; the frontal region (623) in the illustrated case has a flat surface, however it can also present other constructive forms (circular, recess, etc.), just to confirm that this illustrated variation is an alternative and that it can present other possible constructive alternatives.

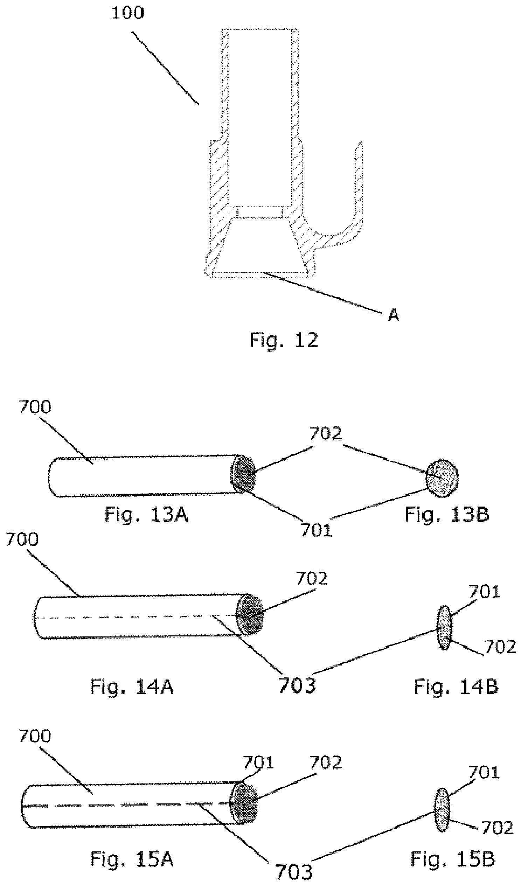

Already as shown in figure 12, the "A" region, internal to the coping with the hook incorporated, must provide a constructive format that allows the implant seat; in the illustrated case it consists of a conical seat, however it should be noted that this is only an illustration for one of the possible construction variations of the internal "A" region, as this may have other constructive configurations, such as cylinder seat, seat with attachment type fixation system, seats for cementation on trunnions, among other possible ones, being that such variations should not be interpreted as novelty or an inventive idea in relation to the proposed object, and not detracting from the inventive step of this document.

Regarding the fiber bar (700), they are illustrated in figures 13 (A, B), 14 (A, B) and 15 (A, B). Said glass fiber bar (700), which is obtained from a bundle (702) of parallel fibers, not fragmented and longitudinally aligned and this being covered by a braided layer (701) of glass fibers. Said glass fiber bar (700) can be deformed, so that its cross section has an oblong shape, or flattened; for this a longitudinal seam (703) (or another longitudinal fixation) is necessary, along the central region of the fiber bar (700). For the realization of this longitudinal seam (703) (or fixation) on the fiber bar (700), compatible techniques and tools must be employed for such execution, depending on the chosen fixation means (by wire, by metal clamps, by rivets, or other compatible). After this longitudinal sewing step (703), the fiber bar (700) will have its section permanently flattened, giving all the advantages already mentioned to be used in obtaining the framework.

Remembering that these figures are illustrative to better understand the object proposed in this document, and to facilitate interpretation and understanding for a person skilled in the art; thus, some variations of these configurations, as well as the combination of constructive details of an illustration with details constructive elements of another illustration, or even combinations with constructive details not illustrated, should not mischaracterize the object here presented or to be understood like an improvement of these examples.

Thus, in a conceptual way, the object proposed in this document, is a coping with a hook incorporated, the fiber bar (700) with the light-curing resin in order to enable a totally innovative method of obtaining fixed prosthesis framework. It is important remembering that the hooks, incorporated to the coping, can have a different constructive format, (with recesses, spares, chamfers, with more than one hooks, as well as compatible for different types of seats, etc.), as long as it is compatible to receive the constituent element of the framework composed of bundles of resin fiber and the photopolymerizable polymeric material; preferably the hook part goes from the base region and protrudes up to half the height of the coping body approximately. This hook represents innovation in coping, as it allows positioning and organizing the fiber bar (700) close to the coping, receiving the bite pressure transmitted through the polymerized fiber bar (700) and transferring the bite pressure to prosthetic components/implants, it helps to guide the fiber bundle and all the other advantages already mentioned and explained in this document.

The method of obtaining the fixed dental prosthesis frameworks using one of the copings with configurations here presented, as well as one of the configurations of the fiber bar (700) presents, is also the matter of this patent document, since it was to enable the present method of obtaining framework that the configurations of copings and fiber bar, already described, were developed. The proposed method comprises the use of coping with specific configuration as already described and presented in this document, it also comprises the use of a fiberglass bar together with a fluid photopolymerizable resin.

One of the copings (100, 200, 300, 400, 500, or 600), as already presented, with its specific configuration and variations, already described above, consists of the element that will support the glass fiber bar (700).

The glass fiber bar (700), also object of this patent document, is comprised of a braided layer (701) of glass fibers and inside it runs a bundle (702) of parallel fibers, not fragmented and aligned longitudinally. The intact bundle (702), with parallel and aligned configuration, brings to the fiber bar (700) high flexural strength. Said fiber bar (700) can also provide seam (703), as already described.

The glass fiber bar (700) is impregnated with a photopolymerizable resin composition. While not polymerized, it is malleable and allows its shape adjustment to fit the coping hooks and acquire the shape of the prosthesis arch. This photopolymerizable resinous composition covers the entire class of Acrylic and Methacrylic monomers; preferably a composition based on urethane diacrylate (UDA), TEGDMA, and photoinitiator composition is being used; this monomer was selected because it allows rapid polymerization and provides high rigidity to the fiber bar after polymerization. Compositions containing the classic methacrylic monomers can also be used.

When irradiated with blue light from a dental curing light, the resin polymerizes and stiffens the glass fiber bar (700). When photopolymerized, the fiber bar adheres to copings, becomes highly rigid and defines the shape of the framework of the future prosthesis. By stiffening and adhering to the copings, the bar already captures the exact position of the prosthetic components/implants. To facilitate the handling of the bar while not polymerized, it can be covered with a plastic film, glass powder or other material that gives it a dry appearance.

In order to avoid disorganization of the bundles (702) inside the fiber bar (700) and also to facilitate their installation in the coping hooks, one end of the bar may have the bundles (702) and braided cover (701) attached by a ring, clamp or any device or simply have a small segment on the prepolymerized end.

To increase the mechanical properties of the polymerized Fiber Bar, the braided cover (701) and bundle (702) of fibers can be treated with silanes or other coupling agents before being impregnated with the light-curing resin.

The composition of the glass fiber bundles (702) that are suitable for obtaining the bar covers the entire variety of glass fibers, such as type A, type C, type D, type E, type R, type S ( S-1, S-2 and S-3) type ECR, type AR and others. Still, viable alternatives are Quartz, Carbon fibers, Aramid fibers (popularly known as Kevlar), Polypropylene fibers, polyester fibers and other examples that the high performance mechanical fibers market can offer.

Alternatively to what is proposed for the current fiber bar (700), the fiber bundles (702) can still be braided in the form of ribbons or bars, elements already known in the technical field, however also compatible for the proposed method of obtaining. Furthermore, said fiber bar (700) can provide for other specific construction configurations, which may facilitate the proposed method of obtaining and manufacturing.

The fluid photopolymerizable resin, the third component for the method of obtaining the infrastructure described in this document, comprises a composition identical to that used to impregnate the fiber bar, plus loads to obtain greater mechanical resistance and eventually pigments. This resin assists in the process of fixing the bar on the copings and assists in camouflaging the hooks of the copings so that they do not harm the aesthetics of the prosthesis, if thinner walls in the prosthesis allow such part to appear.

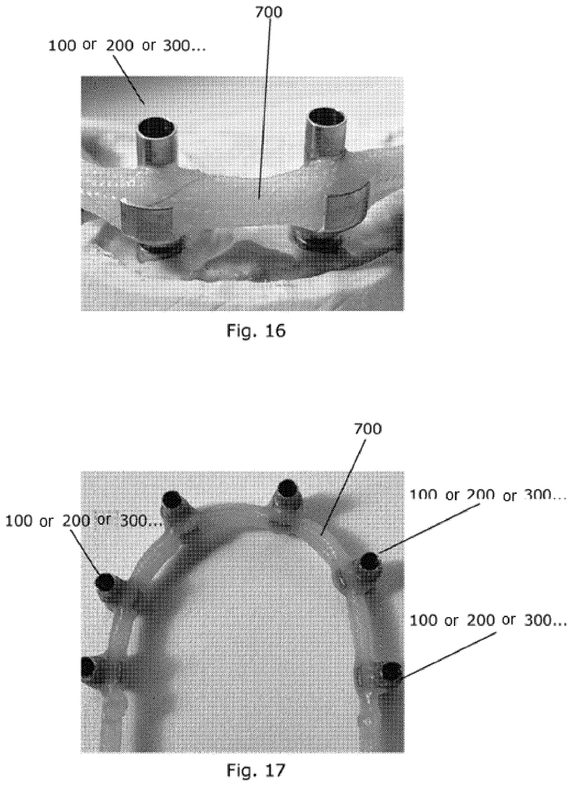

Obtaining, or manufacturing, the fixed prosthesis frameworks comprises a procedure based on a standard prosthesis protocol, and figures 16, 17, 18, 19 and 20 illustrate this achievement, so that:
- a) Once the implants are installed, their respective prosthetic components must be installed.
- b) On the prosthetic components, copings with hook incorporated must be fixed, the fixation can be done by screws used for molding in an open tray.
- c) In this installation, the coping must be aligned with the hook in the position where the fiber bar (700) is desired; figures 10 and 11 illustrate, respectively, a framework obtained with coping with one hook, and with coping with two hooks, respectively. In the framework with coping with two hooks, the fiber bars are arranged, preferably in a braided form.
- d) Once the copings with hooks are fixed, the installation of the fiber bar (700) begins. The fiber bar must be fitted to the coping in such a way that it is evenly distributed along the arch that will receive the prosthesis. To facilitate the process of inserting the bar into the hooks, tweezers, spatulas or the instrument that is preferred by the user can be used.
- e) After fitting the fiber bar (700), the necessary adjustments must be made, such as checking the correct fit and supporting the fiber bar (700) on the hooks, checking the position of the fiber bar according to the desired alignment; or any other adjustments that are necessary before starting the light curing.

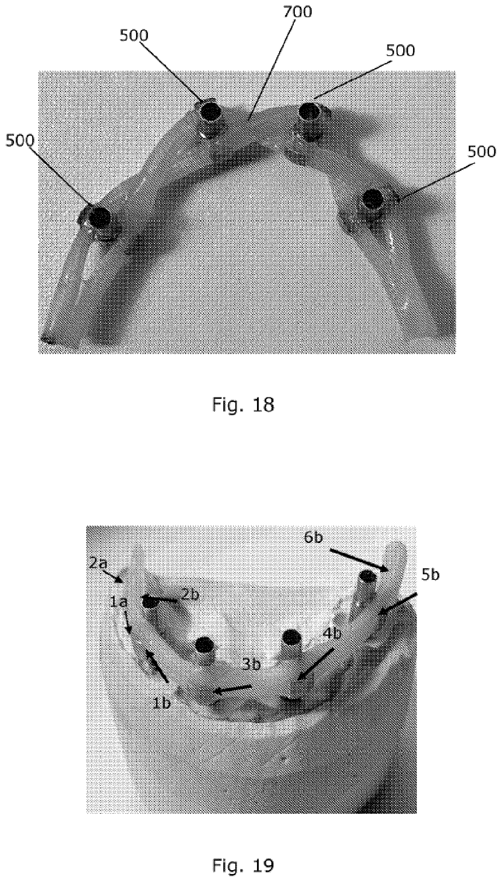

Figure 19 illustrates a diagram for this procedure: with a finger or spatula, press the bar against the coping hooks to ensure its perfect fit (1a), adjust the end of the bar to the ideal alignment position (2a) and start light curing by irradiating the last coping from this end for approximately 5 seconds (1b). Then radiate the end of the bar (2b), making sure that it is in the ideal alignment. In order to have the possibility of adjustments and perfect positioning of the bar, it is suggested to photopolymerize by segment between copings (3b to 5b) until the end (6b), positioning the photopolymerizer with the beam of light always facing the segment that has already received light, thus preserving the segments that have not yet been polymerized.
- f) After the fixing of the bar in all copings, (also known as eyelets), cover these with the fluid resin extending it over the bar; re-polymerize the applied resin. At the end, the bar should be light cured in its entirety, radiating it from all sides for at least 20 seconds each segment.

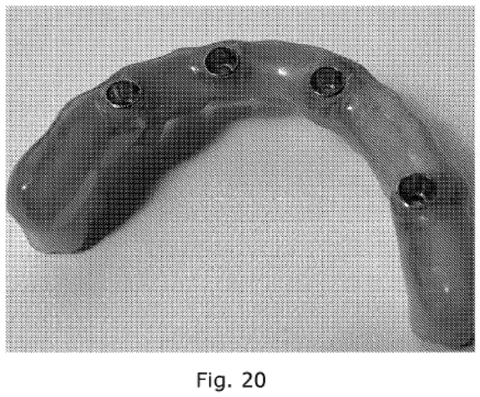

In this way, it is possible to accurately capture the position of the prosthetic components and production the rigid framework (an example in Fig. 20) that will reinforce the prosthesis very easily and quickly.

## Claims

1. A set comprised of dental copings (100, 600) and a fiber bar (700) for the manufacture of dental prosthesis frameworks, the referred copings (100, 600) being screwable, cementable or attachable, **wherein** the copings (100, 600) provide at least one hook (121) having a compatible configuration to receive the referred fiber bar (700), the referred fiber bar (700) being obtained from a bundle (702) of parallel fibers, not fragmented and longitudinally aligned and covered by a braided layer of glass fibers (701) with a longitudinal seam (703) along its central region so that the fiber bar cross section comprises an oblong shape, being the referred braided layer of glass fibers (701) impregnated with a photopolymerizable resin composition.

2. A set for the manufacture of dental prosthesis frameworks according to claim 1, **wherein** the copings (100, 600) comprise a main body (110, 610) and an attachable hook (121, 621) containing a through hole, adapted to fit the referred main body of the copings so that said hook (110, 610) is fixed to the referred main body (110, 610) of the copings (100, 600).

3. A set for the manufacture of dental prosthesis frameworks according to claim 1 or 2, **wherein** the copings (100, 600) provide two hooks (521) aligned in relation to each other.

4. A set for the manufacture of dental prosthesis frameworks according to claim 1 or 2, **wherein** the copings (100, 600) provide two hooks (521) misaligned in relation to each other.

5. A set for the manufacture of dental prosthesis frameworks according to claim 1, **wherein** the hook (121, 621) extends from the base region (230) of the copings and protrudes up to over half the height of the coping body (110, 610).

6. A set for the manufacture of dental prosthesis frameworks according to claim 1, **wherein** the hook (121) is incorporated with the main body (110, 610) of the copings so that said copings (100, 600) are comprised of single bodies.

7. A set for the manufacture of dental prosthesis frameworks according to claim 1, **wherein** the intermediate region (120) of the main body provides some chamfer (122) adapted to facilitate the positioning of the fiber bundle in the circular or arc direction.

8. A set for the manufacture of dental prosthesis frameworks according to claim 1 or 2, **wherein** a surface region of a wall (123, 323, 423, 523, 623), which is facing an inner side of the hook, is flat.

9. A set for the manufacture of dental prosthesis frameworks according to claim 1 or 2, **wherein** a surface region of a wall (123, 223), which is facing an inner side of the hook, is curved.

10. A set for the manufacture of dental prosthesis frameworks according to claim 1 or 2, **wherein** a surface region of a wall (123, 423), facing an inner side of the hook, has a recess, groove or depression.

11. A set for the manufacture of dental prosthesis frameworks according to claim 1, **wherein** the longitudinal seam (703) comprises a resistant thread.

12. A set for the manufacture of dental prosthesis frameworks according to claim 1, **wherein** the longitudinal seam (703) comprises metal clamps.

13. A set for the manufacture of dental prosthesis frameworks according to claim 1, **wherein** the longitudinal seam (703) comprises rivets.

## Patentansprüche

1. Set bestehend aus Zahnkappen (100, 600) und einem Faserstab (700) zur Herstellung von Zahnprothesengerüsten, wobei die Kappen (100, 600) schraubbar, zementierbar oder befestigbar sind, **wobei** die Kappen (100, 600) mindestens einen Haken (121) mit einer kompatiblen Konfiguration zur Aufnahme des genannten Faserstabs (700) aufweisen, wobei der genannte Faserstab (700) aus einem Bündel (702) von parallelen, nicht fragmentierten und in Längsrichtung ausgerichteten Fasern erhalten wird und mit einer geflochtenen Schicht aus Glasfasern (701) mit einer Längsnaht (703) entlang ihres Mittelbereichs bedeckt sind, so dass der Querschnitt des Faserstabs eine längliche Form aufweist, wobei die genannte geflochtene Schicht aus Glasfasern (701) mit einer photopolymerisierbaren Harzzusammensetzung imprägniert ist.

2. Set zur Herstellung von Zahnprothesengerüsten nach Anspruch 1, **wobei** die Kappen (100, 600) einen Hauptkörper (121, 610) und einen anbringbaren Haken (121, 621) mit einem Durchgangsloch umfassen, der so angepasst ist, dass er auf den betreffenden Hauptkörper der Kappen passt, so dass der Haken (110, 610) an dem betreffenden Hauptkörper (110, 610) der Kappen (100, 600) befestigt ist.

3. Set zur Herstellung von Zahnprothesengerüsten nach Anspruch 1 oder 2, **wobei** die Kappen (100, 600) zwei zueinander ausgerichtete Haken (521) aufweisen.

4. Set zur Herstellung von Zahnprothesengerüsten nach Anspruch 1 oder 2, **wobei** die Kappen (100, 600) zwei zueinander versetzte Haken (521) aufweisen.

5. Set zur Herstellung von Zahnprothesengerüsten nach Anspruch 1, **wobei** der Haken (121, 621) vom Basisbereich (230) der Kappen ausgeht und bis über die halbe Höhe des Kappenkörpers (110, 610) vorsteht.

6. Set zur Herstellung von Zahnprothesengerüsten nach Anspruch 1, **wobei** der Haken (121) in den Hauptkörper (110, 610) der Kappen integriert ist, so dass die Kappen (100, 600) aus einem einzigen Körper bestehen.

7. Set zur Herstellung von Zahnprothesengerüsten nach Anspruch 1, **wobei** der Zwischenbereich (120) des Hauptkörpers eine Abschrägung (122) aufweist, die geeignet ist, die Positionierung des Faserbündels in der Kreis- oder Bogenrichtung zu erleichtern.

8. Set zur Herstellung von Zahnprothesengerüsten nach Anspruch 1 oder 2, **wobei** ein Oberflächenbereich einer Wand (123, 323, 423, 523, 623), der einer Innenseite des Hakens zugewandt ist, eben ist.

9. Set zur Herstellung von Zahnprothesengerüsten nach Anspruch 1 oder 2, **wobei** ein Oberflächenbereich einer Wand (123, 223), der einer Innenseite des Hakens zugewandt ist, gekrümmt ist.

10. Set zur Herstellung von Zahnprothesengerüsten nach Anspruch 1 oder 2, **wobei** ein Oberflächenbereich einer Wand (123, 423), der einer Innenseite des Hakens zugewandt ist, eine Ausnehmung, Nut oder Vertiefung aufweist.

11. Set zur Herstellung von Zahnprothesengerüsten nach Anspruch 1, **wobei** die Längsnaht (703) ein widerstandsfähiges Gewinde umfasst.

12. Set zur Herstellung von Zahnprothesengerüsten nach Anspruch 1, **wobei** die Längsnaht (703) Metallklammern umfasst.

13. Set zur Herstellung von Zahnprothesengerüsten nach Anspruch 1, **wobei** die Längsnaht (703) Nieten umfasst.

## Revendications

1. Ensemble composé de chapes dentaires (100, 600) et d'une barre de fibres (700) pour la fabrication d'armatures de prothèses dentaires, lesdites chapes (100, 600) étant vissables, cimentables ou attachables, **dans lequel** les chapes (100, 600) présentent au moins un crochet (121) ayant une configuration compatible pour recevoir ladite barre de fibres (700), cette barre de fibres (700) étant obtenue à partir d'un faisceau (702) de fibres parallèles, non fragmentées et alignées longitudinalement et recouvertes d'une couche tressée de fibres de verre (701) avec une couture longitudinale (703) le long de sa région centrale de sorte que la section transversale de la barre de fibres présente une forme oblongue, ladite couche tressée de fibres de verre (701) étant imprégnée d'une composition de résine photopolymérisable.

2. Ensemble pour la fabrication d'armatures de prothèses dentaires selon la revendication 1, **dans lequel** les chapes (100, 600) comprennent un corps principal (110, 610) et un crochet attachable (121, 621) contenant un trou traversant, adapté audit corps principal des chapes de sorte que ledit crochet (110, 610) est fixé audit corps (110, 610) des chapes (100, 600).

3. Ensemble pour la fabrication d'armatures de prothèses dentaires selon la revendication 1 ou 2, **dans lequel** les chapes (100, 600) présentent deux crochets (521) alignés l'un par rapport à l'autre.

4. Ensemble pour la fabrication d'armatures de prothèses dentaires selon la revendication 1 ou 2, **dans lequel** les chapes (100, 600) présentent deux crochets (521) désalignés l'un par rapport à l'autre.

5. Ensemble pour la fabrication d'armatures de prothèses dentaires selon la revendication 1, **dans lequel** le crochet (121, 621) s'étend à partir de la région de base (230) des chapes et fait saillie jusqu'à plus de la moitié de la hauteur du corps de la chape (110, 610).

6. Ensemble pour la fabrication d'armatures de prothèses dentaires selon la revendication 1, **dans lequel** le crochet (121) est incorporé au corps principal (110, 610) des chapes, de sorte que lesdites chapes (100, 600) sont constituées d'un seul corps.

7. Ensemble pour la fabrication d'armatures de prothèses dentaires selon la revendication 1, **dans lequel** la région intermédiaire (120) du corps principal présente un chanfrein (122) adapté pour faciliter le positionnement du faisceau de fibres dans la direction circulaire ou de l'arc.

8. Ensemble pour la fabrication d'armatures de prothèses dentaires selon la revendication 1 ou 2, **dans lequel** une région de la surface d'une paroi (123, 323, 423, 523, 623), laquelle fait face à un côté intérieur du crochet, est plate.

9. Ensemble pour la fabrication d'armatures de prothèses dentaires selon la revendication 1 ou 2, **dans lequel** une région de la surface d'une paroi (123, 223), laquelle fait face à un côté intérieur du crochet, est incurvée.

10. Ensemble pour la fabrication d'armatures de prothèses dentaires selon la revendication 1 ou 2, **dans lequel** une région de la surface d'une paroi (123, 423), laquelle fait face à un côté intérieur du crochet, présente un creux, une rainure ou une dépression.

11. Ensemble pour la fabrication d'armatures de prothèses dentaires selon la revendication 1, **dans lequel** la couture longitudinale (703) comprend un fil résistant.

12. Ensemble pour la fabrication d'armatures de prothèses dentaires selon la revendication 1, **dans lequel** la couture longitudinale (703) comprend des agrafes métalliques.

13. Ensemble pour la fabrication d'armatures de prothèses dentaires selon la revendication 1, dans lequel la couture longitudinale (703) comprend des rivets.
